# EUROPEAN PATENT APPLICATION

(11) **EP 3 199 858 A1**
(43) Date of publication of application: **02.08.2017**
(21) Application number: 15893179.0
(22) Date of filing: 30.12.2015
(51) Int. Cl.: F16M 11/22

(54) **MULTI-ANGLE CAMERA SUPPORTING DEVICE**

(30) Priority: 26.05.2015 CN 201510272663
(71) Applicant: Beijing Savoye Image Tech Co., Ltd, Beijing 100097 (CN)
(72) Inventor: ZHOU, Ruogu, Haidian District Beijing 100080 (CN)
(74) Representative: Grey, Ian Michael
(86) International application number: PCT/CN2015/099652
(87) International publication number: WO 2016/188111

(57) **Abstract**

The present disclosure relates to the field of photographic technology, and particularly relates to a multi-angle camera supporting device. The multi-angle camera supporting device includes a support body, wherein a bottom of the support body is provided with a bottom supporting plane and oblique supporting planes in a side direction of the bottom supporting plane. The bottom supporting plane and the oblique supporting planes in the side direction of the bottom supporting plane are arranged at the bottom of the support body, the bottom supporting plane or the oblique supporting plane is used as a supporting contact surface to achieve stable placement in different angles, the camera supporting device equipped with the camera can be conveniently and quickly placed on the ground, a desktop and other platforms for shooting in a variety of pitch angles, and the camera supporting device is simple to operate, portable and applicable to shooting in special environments.

## Description

### Technical Field

The present disclosure relates to the field of photographic technology, and particularly relates to a multi-angle camera supporting device.

### Background

At present, most camera arrangement devices of shooting and lighting equipment and other optical and electronic equipment are fixed by two parts, namely a fixing bracket (including a tripod, a sucker, a fixture and the like) and an angle adjusting device (including various manual and electric tripod heads, a snake arm and the like).

However, for users who wish a more convenient placement process, especially for users of portable shooting equipment represented by sports cameras, the existing camera arrangement devices have the following drawbacks:
1. The operation is cumbersome, time-consuming and laborious, the fixing brackets and the angle adjusting devices need to be respectively adjusted, and complicated actions are also required during disassembly.
2. It is inconvenient to carry. The device has a larger volume and a heavier weight, therefore the burden to carry is increased, the device can be neither arranged on a very small plane nor in a very small space height, and low location angle arrangement is also hard to achieve.
3. Special shooting is difficult to satisfy. In many cases (e.g., photography), the equipment needs to be kept horizontal or approximately horizontal in left and right directions, and the current devices need to be achieved by leveling operations; and when approximately identical placement angles are required on different locations (for example, two different location pictures need to be synthesized in the photography, the post-synthesis effect is more realistic due to approximately identical shooting angles), the operation is relatively cumbersome.

Therefore, in view of the above shortcomings, it is necessary to provide a multi-angle camera supporting device.

### Summary

### (1) Technical Problem to Be Solved

The objective of the present disclosure is to provide a multi-angle camera supporting device, in order to solve the problem that the existing camera supporting devices are cumbersome to operate and inconvenient to carry and cannot meet special shooting requirements.

### (2) Technical Solution

To solve the aforementioned technical problem, the present disclosure provides a multi-angle camera supporting device, including a support body, wherein a bottom of the support body is provided with a bottom supporting plane and oblique supporting planes in a side direction of the bottom supporting plane; and an upper surface of the support body is provided with camera fixing units, and a camera is fixed on the support body by the camera fixing units.

The oblique supporting planes include a front supporting plane arranged on a front side of the bottom supporting plane and a back supporting plane located on a back side of the bottom supporting plane, and the front supporting plane and the back supporting plane form different included angles with the bottom supporting plane.

The oblique supporting planes further include a left supporting plane arranged on a left side of the bottom supporting plane and a right supporting plane located on a right side of the bottom supporting plane, and the left supporting plane and the right supporting plane form different included angles with the bottom supporting plane.

The camera fixing units are a plurality of holding components on an upper surface of the support body.

The holding components include a first holding component matched with a bottom end of the camera, a second holding component is formed in the bottom of the first holding component, and the second holding component is matched with a side end of the camera.

The holding components further include a third holding component, a front side edge and a back side edge of the first holding component respectively extend forward and backward to form the bottom of the third holding component together.

A magnet is arranged in the bottom of the support body.

When the front supporting plane is placed on a supporting platform, the included angle between the camera and a vertical plane is 25-35 degrees; when the bottom supporting plane is placed on the supporting platform, the included angle between the camera and the vertical plane is 5-25 degrees; and when the back supporting plane is placed on the supporting platform, the included angle between the camera and the vertical plane is 40-50 degrees.

When the left supporting plane is placed on the supporting platform, the included angle between the camera and the vertical plane is 35-55 degrees; and when the right supporting plane is placed on the supporting platform, the included angle between the camera and the vertical plane is 35-55 degrees.

Marks of the degrees of the included angles between the supporting planes and the camera are arranged on the side edges or bottom surfaces of the supporting planes.

### (3) Beneficial Effects

The aforementioned technical solutions of the present disclosure have the following advantages: the bottom supporting plane and the oblique supporting planes in the side direction of the bottom supporting plane are arranged at the bottom of the support body, the bottom supporting plane and the oblique supporting planes are used as supporting contact surfaces to achieve stable placement in different angles, the camera supporting device equipped with the camera can be conveniently and quickly placed on the ground, a desktop and other platforms for shooting in a variety of pitch angles, and the camera supporting device is simple to operate, portable and applicable to shooting in special environments.

### Brief Description of the Drawings

Fig. 1 is a perspective view of a multi-angle camera supporting device in an embodiment of the present disclosure;
Fig. 2 is a perspective view of a lower visual angle of a multi-angle camera supporting device in an embodiment of the present disclosure;
Fig. 3 is a schematic diagram of three placement states of a multi-angle camera supporting device in an embodiment of the present disclosure after a camera is placed;
Fig. 4 is a perspective view of a multi-angle camera supporting device in an embodiment of the present disclosure, when a camera is at a horizontal location;

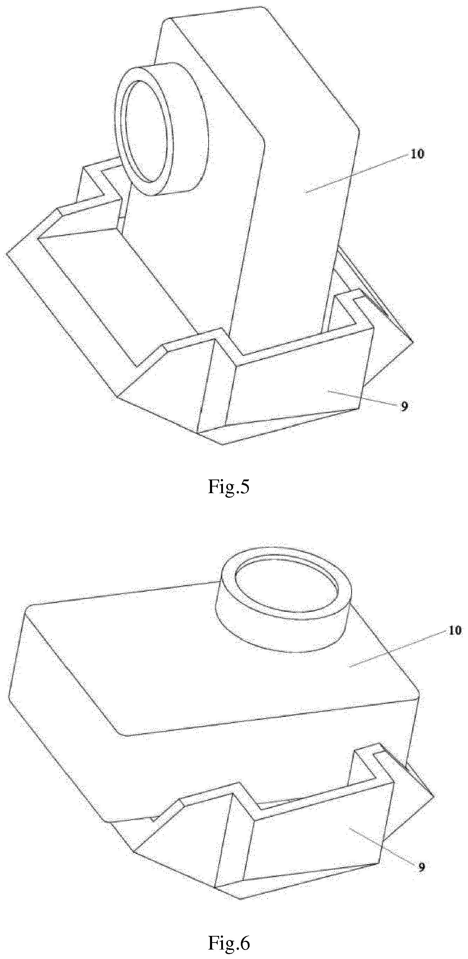

Fig. 5 is a perspective view of a multi-angle camera supporting device in an embodiment of the present disclosure, when a camera is at a vertical location; and
Fig. 6 is a perspective view of a multi-angle camera supporting device in an embodiment of the present disclosure, when a camera is at a lying location.

### Reference signs

1: first holding component; 2: second holding component; 3: third holding component; 4: bottom supporting plane; 5: front supporting plane; 6: back supporting plane; 7: left supporting plane; 8: right supporting plane; 9: support body; 10: camera.

### Detailed Description

Specific implementations of the present disclosure will be further described below in detail in combination with the accompany drawings and embodiments. The following embodiments are used for illustrating the present disclosure, rather than limiting the scope of the present disclosure.

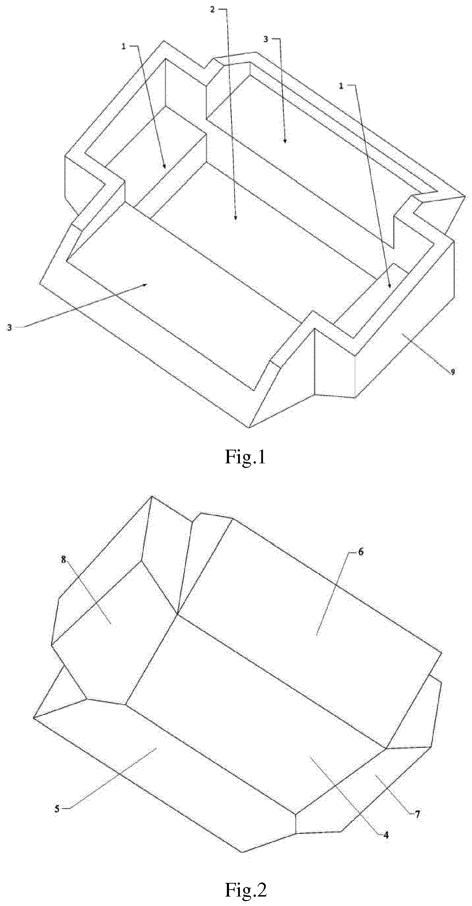

As shown in Fig. 1, a multi-angle camera supporting device provided by the present disclosure includes a support body 9, a bottom of the support body 9 is provided with a bottom supporting plane 4 and a plurality of oblique supporting planes in a circumferential direction of the bottom supporting plane 4, and the oblique supporting planes intersect with the bottom supporting plane 4; and an upper surface of the support body 9 is provided with camera fixing units, and a camera 10 is fixed on the support body 9 by the camera fixing units.

In the aforementioned embodiment, the bottom supporting plane 4 and the plurality of oblique supporting planes in the circumferential direction of the bottom supporting plane 4 are arranged at the bottom of the support body 9, the bottom supporting plane 4 and the oblique supporting planes are used as supporting contact surfaces to achieve stable placement in different angles, the camera supporting device equipped with the camera 10 can be conveniently and quickly placed on the ground, a desktop and other platforms for shooting in a variety of pitch angles, and the camera supporting device is simple to operate, portable and applicable to shooting in special environments.

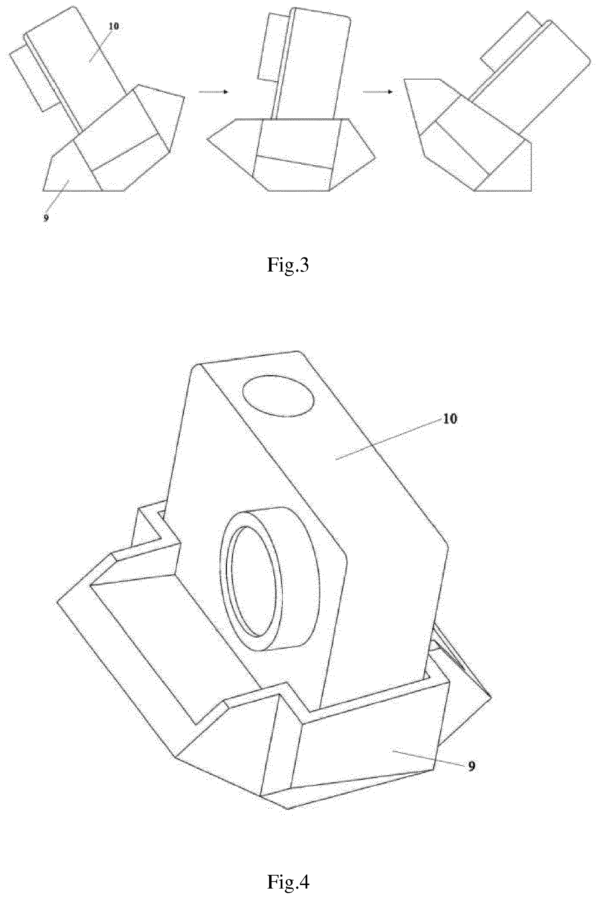

Further, the oblique supporting planes include a front supporting plane 5 arranged on a front side of the bottom supporting plane 4 and a back supporting plane 6 located on a back side of the bottom supporting plane 4, and the front supporting plane 5 and the back supporting plane 6 form different included angles with the bottom supporting plane 4. As shown in Fig. 4, as the front supporting plane 5 and the back supporting plane 6 are arranged, forward shooting and backward shooting of the camera 10 can be facilitated, that is to say, the camera 10 can conveniently shoot in three states, namely a forward state, a vertical state and a backward state, thereby being simple and convenient to operate.

Further, the oblique supporting planes further include a left supporting plane 7 arranged on a left side of the bottom supporting plane 4 and a right supporting plane 8 located on a right side of the bottom supporting plane 4, and the left supporting plane 7 and the right supporting plane 8 form different included angles with the bottom supporting plane 4. As the left supporting plane 7 and the right supporting plane 8 are arranged, the camera 10 can shoot in a state of inclining towards left and right sides, and the operation is convenient and easy.

In order to conveniently and quickly place the camera 10 on the support body 9, a plurality of holding components are formed in an upper surface of the support body 9 to serve as the camera fixing units; the holding components include a first holding component 1 matched with a bottom end of the camera 10 for locating the camera 10 at a horizontal location, a second holding component 2 is formed in the bottom of the first holding component 1, and the second holding component 2 is matched with a side end of the camera 10 for locating the camera 10 at a vertical location, and due to arrangement of the location relationship of the second holding component 2 and the first holding component 1, the structure of the present disclosure is relatively compact.

Preferably, the holding components further include a third holding component 3, a front side edge and a back side edge of the first holding component 1 respectively extend forward and backward to form the bottom of the third holding component 3 together, so as to locate the camera 10 at a lying location, and due to the location relationship of the third holding component 3 and the first holding component 1, the structure of the present disclosure is relatively compact.

Of course, the camera fixing units in the present disclosure can also be locating clips arranged on the upper surface of the support body 9 or the camera 10 can be fixed in other manners. A magnet is arranged in the bottom of the support body. Therefore, when the material of a supporting platform is iron, the camera supporting device in the present disclosure can be stably absorbed and fixed.

Preferably, when the front supporting plane is placed on the supporting platform, the included angle between the camera and a vertical plane is 25-35 degrees; when the bottom supporting plane is placed on the supporting platform, the included angle between the camera and the vertical plane is 5-25 degrees; when the back supporting plane is placed on the supporting platform, the included angle between the camera and the vertical plane is 40-50 degrees; when the left supporting plane is placed on the supporting platform, the included angle between the camera and the vertical plane is 35-55 degrees; and when the right supporting plane is placed on the supporting platform, the included angle between the camera and the vertical plane is 35-55 degrees. Marks of the degrees of the included angles between the supporting planes and the camera are arranged on the side edges or bottom surfaces of the supporting planes, thereby being convenient to select and use and being clear at a glance during the selection; and when approximately identical placement angles are required at different locations, the same location only needs to be adopted during every placement according to the marks of the angles.

Due to the aforementioned arrangement of the degrees of the included angles, conventional shooting demands of the camera 10 can be satisfied. Of course, the angles listed above are not limited in the present disclosure, and other angles can also be set according to the shooting demands.

When the multi-angle camera supporting device provided by the present disclosure is used, the camera 10 is inserted in a mounting groove according to an expected manner at first, the bottom supporting plane 4 or a certain oblique supporting plane is selected to serve as the supporting contact surface and is placed on the ground, the desktop or other platforms, and then shooting is executed.

The multi-angle camera supporting device provided by the present disclosure is mainly applicable to support shooting of miniature cameras 10, particularly multi-angle support of sports cameras 10 (e.g., Gopro Hero, Mi Yi).

The technical effects of the components of the multi-angle camera supporting device provided by the present disclosure are as follows:
a plurality of holding components are formed in the upper surface of the support body 9, the camera 10 and the support body 9 can be connected quickly due to this mounting groove type arrangement, and the mounting and dismounting speeds are greatly improved; the plurality of holding components are combined-form mounting grooves and can be quickly switched between the horizontal location and the vertical location just by two simple actions of pulling out and inserting, so that the operation is simple and convenient; the camera can be quickly placed on the ground, the desktop or other platforms at a necessary angle by the supporting contact surfaces in different angles; and due to the combination of the combined-form mounting grooves and the supporting contact surfaces in different angles, a plurality of preset angles are formed to solve a plurality of location demands of a horizontal pitch angle, a horizontal depression angle, a vertical pitch angle and a vertical depression angle.

The technical effects of the overall multi-angle camera supporting device provided by the present disclosure are as follows:
The present disclosure is simple in overall structure, small in volume, light in weight, convenient to carry, high in placement speed and convenient to take selfies, and does not need to be held on hands or leveled; the equipment can be arranged in a narrow plane or space, ultralow angle arrangement can be achieved, and when approximately identical placement angles are required on different locations, the operation is convenient; and since the present disclosure is small in volume, light in weight and simple in structure, materials can be obviously saved, the process links can be greatly reduced, the manufacturing cost is lowered, and environmental protection is easy to achieve.

The foregoing descriptions are merely preferred embodiments of the present disclosure. It should be noted that for those of ordinary skill in the art, a variety of improvements and variations can also be made without departing from the technical principle of the present disclosure, and these improvements and variations shall fall within the protection scope of the present disclosure.

## Claims

1. A multi-angle camera supporting device, comprising a support body, wherein a bottom of the support body is provided with a bottom supporting plane and oblique supporting planes in a side direction of the bottom supporting plane; and an upper surface of the support body is provided with camera fixing units, and a camera is fixed on the support body by the camera fixing units.

2. The multi-angle camera supporting device of claim 1, wherein the oblique supporting planes comprise a front supporting plane arranged on a front side of the bottom supporting plane and a back supporting plane located on a back side of the bottom supporting plane, and the front supporting plane and the back supporting plane form different included angles with the bottom supporting plane.

3. The multi-angle camera supporting device of claim 1, wherein the oblique supporting planes further comprise a left supporting plane arranged on a left side of the bottom supporting plane and a right supporting plane located on a right side of the bottom supporting plane, and the left supporting plane and the right supporting plane form different included angles with the bottom supporting plane.

4. The multi-angle camera supporting device of any one of claims 1-3, wherein the camera fixing units are holding components on an upper surface of the support body.

5. The multi-angle camera supporting device of claim 4, wherein the holding components comprise a first holding component matched with a bottom end of the camera, a second holding component is formed in the bottom of the first holding component, and the second holding component is matched with a side end of the camera.

6. The multi-angle camera supporting device of claim 5, wherein the holding components further comprise a third holding component, a front side edge and a back side edge of the first holding component respectively extend forward and backward to form the bottom of the third holding component together.

7. The multi-angle camera supporting device of claim 1, wherein a magnet is arranged in the bottom of the support body.

8. The multi-angle camera supporting device of claim 2, wherein when the front supporting plane is placed on a supporting platform, the included angle between the camera and a vertical plane is 25-35 degrees; when the bottom supporting plane is placed on the supporting platform, the included angle between the camera and the vertical plane is 5-25 degrees; and when the back supporting plane is placed on the supporting platform, the included angle between the camera and the vertical plane is 40-50 degrees.

9. The multi-angle camera supporting device of claim 3, wherein when the left supporting plane is placed on the supporting platform, the included angle between the camera and the vertical plane is 35-55 degrees; and when the right supporting plane is placed on the supporting platform, the included angle between the camera and the vertical plane is 35-55 degrees.

10. The multi-angle camera supporting device of claim 8 or 9, wherein marks of the degrees of the included angles between the supporting planes and the camera are arranged on the side edges or bottom surfaces of the supporting planes.
